# EUROPÄISCHE PATENTSCHRIFT

(11) **EP 2 701 257 B1**
(45) Veröffentlichungstag und Bekanntmachung des Hinweises auf die Patenterteilung: **01.07.2020**
(21) Anmeldenummer: 13180266.2
(22) Anmeldetag: 13.08.2013
(51) Int. Cl.: H02H 7/28, H02H 7/26

(54) **Verfahren zum Transport von Strom über ein vermaschtes Stromnetz**
Method for transporting power over a meshed power network
Procédé de transport de courant via un réseau électrique maillé

(30) Priorität: 22.08.2012 DE 102012214927
(43) Veröffentlichungstag der Anmeldung: 26.02.2014
(73) Patentinhaber: Bayernwerk AG, 93049 Regensburg (DE)
(72) Erfinder: Bauer, Thomas, 95445 Bayreuth (DE); Peine, Elmar, 95444 Bayreuth (DE); Welz, Uwe, 95500 Heinersreuth (DE)
(74) Vertreter: Dr. Gassner & Partner mbB

(56) Entgegenhaltungen:
- EP-A2- 2 149 955
- WO-A1-00/48284
- US-A- 3 277 344

## Beschreibung

Die Erfindung betrifft ein Verfahren zum Transport von Strom über ein vermaschtes Stromnetz nach dem Oberbegriff des Anspruchs 1.

Eine entsprechende Vorrichtung ist aus der WO 2011/015587 A2 bekannt. Bei der bekannten Vorrichtung sind eine Vielzahl von in Strängen zusammengefassten fotovoltaischen Modulen zum Zuführen elektrischer Energie vorgesehen. Zur Verbindung jedes Strangs mit einem Stromnetz ist ein Leistungsschalter zum selektiven Trennen des entsprechenden Strangs vorgesehen. Der Leistungsschalter wird unter Verwendung einer zentralen Überwachungseinheit und nachgeordneten Controllern geöffnet, wenn im betreffenden Strang mittels eines Leistungssensors ein Fehler detektiert wird.

Die DE 40 27 917 A1, DE 40 27 918 A2 EP 2 149 955 A2, WO 00/48284, sowie die DE 40 27 919 A1 betreffen jeweils ein Verfahren und eine Vorrichtung zum selektiven Abtrennen von Leitungsabschnitten in Energieversorgungsnetzen. Dabei sind benachbarte Leitungsabschnitte mittels Steuereinheiten miteinander verbunden. Die Steuereinheiten wiederum stehen über Signalleitungen miteinander zum Datenaustausch in Verbindung. In Abhängigkeit der miteinander ausgetauschten Daten kann ein Überstrom oder Kurzschluss erkannt und mittels der Steuereinheiten ein Leitungsabschnitt selektiv abgetrennt werden.

Die DE 100 08 185 A1 offenbart ein Verfahren zum selektiven Schutz bei Kurzschlüssen in stationären Verbraucherstromkreisen bei Einsatz von mindestens einer Energiequelle mit Stromregelcharakteristik. Die Erkennung des Kurzschlusses an der stromgeregelten Energiequelle erfolgt mittels zumindest eines Schutzschalters, welcher die stromgeregelte Energiequelle mit dem Stromnetz verbindet. Es wird die zeitliche Änderung der Energieaufnahmefähigkeit des Stromnetzes ermittelt. Bei Überschreiten oder Unterschreiten eines vorgegebenen zulässigen Schwellwerts für die zeitliche Änderung der Energieaufnahmefähigkeit des Stromnetzes wird die Verbindung zwischen stromgeregelter Energiequelle und dem Stromnetz getrennt.

Die DE 197 49 698 A1 offenbart eine Schaltungsanordnung zur Selektivitätssteuerung eines Ausschaltvorgangs beim Auftreten eines Kurzschlusses in einem Energieverteilungsnetz. Dabei sind zwei Teilnetze mit jeweils einer eignen Energieeinspeisung über einen Kuppelschalter miteinander verbindbar. Die Verbindung der beiden Teilnetze ist mit einem Detektor zur Ermittlung der Energieflussrichtung versehen. Ein Überstromauslöser des Kuppelschalters weist einen Signaleingang zum Empfangen von Blockiersignalen von Überstromauslösern von Abgangsschaltern beider Teilnetze auf. Die Blockiersignale jedes Teilnetzes sind zu einem Gruppensignal zusammengefasst.

Die EP 2 290 774 A1 betrifft eine Schutzvorrichtung zum Schutz eines Stromnetzes. Dabei ist ein Speicher für elektrische Energie parallel zum Stromnetz geschaltet. Sobald ein Controller ein durch einen Kurzschluss bewirkten Spannungsabfall im Stromnetz detektiert, entlädt der Speicher zumindest einen Teil der gespeicherten elektrischen Energie in das Stromnetz. Durch die dadurch erzeugte Entladungsspannung wird ein Schwellwert einer Sicherheitseinrichtung überschritten und die Sicherheitseinrichtung aktiviert.

Die vorgenannten Vorrichtungen und Verfahren dienen der Absicherung von Energieversorgungsnetzen gegen Störungen.

Wegen der zunehmenden Bedeutung erneuerbarer Energiequellen, insbesondere von Windkraftanlagen, ist ein Ausbau der Stromnetze erforderlich. Ein Bau neuer Stromnetze erfordert einen erheblichen Zeitaufwand. Gleichwohl besteht der Bedarf, kurzfristig zusätzliche Stromnetzkapazitäten bereitzustellen. Aufgabe der Erfindung ist es, die Nachteile nach dem Stand der Technik zu beseitigen. Es soll insbesondere ein Verfahren angegeben werden, das die Nutzung eines bestehenden Stromnetzes mit verbesserter Effizienz ermöglicht. Das Verfahren soll nach einem weiteren Ziel der Erfindung möglichst einfach und kostengünstig durchführbar sein.

Diese Aufgabe wird durch die Merkmale des Anspruchs 1 gelöst. Zweckmäßige Ausgestaltungen der Erfindung ergeben sich aus den Merkmalen der Ansprüche 2 bis 7.

Im Sinne der vorliegenden Erfindung wird unter dem Begriff "Störung" ein Betriebszustand des vermaschten Stromnetzes verstanden, bei dem der Lastfluss an zumindest einer Stelle im Stromnetz unterbrochen ist.

Mit dem erfindungsgemäßen Verfahren ist es möglich, ein Stromnetz bis zur zulässigen maximalen thermischen Belastungsgrenze zu betreiben. Damit kann die Kapazität eines vorhandenen Stromnetzes besonders effizient genutzt werden. Nach dem erfindungsgemäßen Verfahren ist es insbesondere möglich, z. B. nach Eintritt einer Störung, durch gezielte Abschaltung zumindest einer ausgewählten Energieerzeugungsvorrichtung eine Überlastung des Stromnetzes zu vermeiden. Es kann darauf verzichtet werden, im Stromnetz Kapazitäten freizuhalten, um im Falle einer Störung eine Überlastung von Betriebsmitteln zu vermeiden. Mit dem erfindungsgemäßen Verfahren ist es möglich, nach einem Ausfall eines Betriebsmittels, beispielsweise infolge eines Kurzschlusses, schnell und sicher einen ordnungsgemäßen Belastungszustand unterhalb der Belastungsgrenze wiederherzustellen.

Erfindungsgemäß wird das Stromnetz mittels einer zweiten Sicherungseinrichtung auf Störungen überwacht. Die zweite Sicherungseinrichtung umfasst eine Steuerung, die einerseits mit mehreren Mess- und Signalerzeugungsvorrichtungen und andererseits mit den Auslöseeinrichtungen verbunden ist. Bei Erkennung einer Störung wird mittels zumindest einer der Mess- und Signalerzeugungsvorrichtungen ein Abschaltsignal erzeugt und an die Steuerung übermittelt. Mittels der Steuerung ist zumindest eine der Auslöseeinrichtungen ausgewählt und das Abschaltsignal wird an die ausgewählte Auslöseeinrichtung weitergeleitet. Die ausgewählte Auslöseeinrichtung bewirkt sodann ein Öffnen des ihr zugeordneten zumindest einen Leistungsschalters und die Trennung der entsprechenden Energieerzeugungsvorrichtung vom Stromnetz.

Im Sinne der vorliegenden Erfindung wird unter dem Begriff "Leistungsschalter" eine Vorrichtung verstanden, welche z. B. beim Auftreten eines Kurzschlusses, automatisch eine Energieerzeugungsvorrichtung vom Stromnetz trennt. Das Öffnen des Leistungsschalters erfolgt autonom, d. h. der Leistungsschalter wird zu diesem Zweck nicht von der Leitstelle angesteuert. Er kann zu diesem Zweck beispielsweise durch ein Kurzschlussschutzrelais oder dgl. angesteuert werden.

Im Sinne der vorliegenden Erfindung wird unter dem Begriff "Auslöseeinrichtung" allgemein eine Einrichtung verstanden, mit der ein Abschaltsignal in ein entsprechendes Signal umgewandelt wird, um einen Leistungsschalter zu öffnen oder zu schließen. Im einfachsten Fall kann es sich bei der Auslöseeinrichtung um ein Leistungsrelais handeln. Die Auslöseeinrichtung kann auch ein Schutzrelais oder ein Feldleitgerät oder dgl. sein. Es ist auch denkbar, als Auslöseeinrichtung eine vom Leistungsschalter umfasste weitere Auslöseeinrichtung, z. B. das Kurzschlussschutzrelais, zu verwenden.

Die Steuerung ist zum Datenaustausch mit der Leitstelle verbunden. Das ermöglicht es, die Steuerung zu konfigurieren. Es können insbesondere die Abschaltbeziehungen zwischen den Mess- und Signalerzeugungsvorrichtungen und den Auslöseeinrichtungen geändert werden. Die Steuerung kann beispielsweise als schaltbarer Rangierverteiler ausgebildet sein, bei dem eine Auswahlmatrix zur Weiterleitung der Abschaltsignale mittels der Leitstelle geändert werden kann.

Erfindungsgemäß wird die Steuerung durch ein von der Leitstelle erzeugtes Aktivierungssignal in einen aktiven Betriebszustand versetzt, wenn ein Überschreiten eines vorgegebenen Last-Grenzwerts festgestellt wird. D. h. solange der vorgegebene Last-Grenzwert seitens der Leitstelle nicht festgestellt wird, ist die Steuerung in einem passiven Betriebszustand bzw. ausgeschaltet. Damit kann sicher und zuverlässig die Weiterleitung eines Abschaltsignals verhindert werden, solange die Steuerung nicht im aktiven Betriebszustand ist. Es kann damit insbesondere erreicht werden, dass Abschaltsignale unberücksichtigt bleiben, solange ein von der Leitstelle vorgegebener Last-Grenzwert nicht festgestellt und infolgedessen die Steuerung nicht in den aktiven Betriebszustand versetzt worden ist.

Der Begriff "Last-Grenzwert" ist im Sinne der vorliegenden Erfindung allgemein zu verstehen. Der Last-Grenzwert kann sich aus Strom-, Spannungs-, Lastflussrichtungsmessungen oder dgl. ergeben. Er kann auch das Ergebnis von Berechnungen oder Simulationen eines Programms sein, welches zur Überwachung und/oder Steuerung, insbesondere Lastflusssteuerung, in der Leitstelle betrieben wird.

Im aktiven Betriebszustand der Steuerung sind Signalwege zwischen den Mess- und Signalerzeugungsvorrichtungen und den Auslöseeinrichtungen freigeschaltet. Bei den Signalwegen handelt es sich zweckmäßigerweise um Signalwege zur Übertragung von Binärsignalen. Die Übertragung von Binärsignalen ist besonders schnell und störunanfällig. Sie ermöglicht eine besonders schnelle Ansteuerung eines Leistungsschalters und damit ein schnelles Trennen einer ausgewählten Energieerzeugungsvorrichtung vom Stromnetz.

Zweckmäßigerweise werden zur Erkennung einer Störung im Stromnetz mit jeder der Mess- und Signalerzeugungsvorrichtungen der durch sie fließende Strom, die bei ihr herrschende Lastflussrichtung und/oder ein bei ihr auftretendes weiteres Abschaltsignal erfasst. Das weitere Abschaltsignal kann beispielsweise von einem Kurzschlussschutzrelais erzeugt werden, ein Abschaltbefehl der Steuerstellen sein oder durch eine sprunghafte Änderung einer Messgröße erkannt werden.

Nach einer weiteren Ausgestaltung der Erfindung wird die Mess- und Signalerzeugungsvorrichtung mit einer zeitlichen Verzögerung von einem passiven in einen aktiven Betriebszustand versetzt, wenn einstellbare Ansprech-Grenzwerte für den durch sie fließenden Strom und eine bei ihr herrschende Lastflussrichtung überschritten werden. Das Abschaltsignal kann in diesem Fall nur im aktiven Betriebszustand erzeugt werden. Die zeitliche Verzögerung kann beispielsweise so gewählt werden, dass ein Umschalten vom passiven in den aktiven Betriebszustand allein durch dynamische Lastschwankungen und/oder Kurzschlüsse im Stromnetz nicht bewirkt wird. Die zeitliche Verzögerung kann beispielsweise 2 bis 10 Sekunden, vorzugsweise 4 bis 8 Sekunden, betragen. - Bei einem Unterschreiten einstellbarer Rückfall-Grenzwerte kann die Mess- und Signalerzeugungsvorrichtung wieder, vorteilhafterweise mit einer weiteren zeitlichen Verzögerung, in den passiven Betriebszustand versetzt werden.

Nach einer weiteren vorteilhaften Ausgestaltung sind die Steuerung, die Mess- und Signalerzeugungsvorrichtungen sowie die Auslöseeinrichtungen mittels Binärsignalübertragungseinrichtungen zur Signalübertragung verbunden.

Nach einer weiteren besonders vorteilhaften Ausgestaltung der Erfindung wird die Auswahl der Auslöseeinrichtung mittels einer in der Steuerung gespeicherten vorgegebenen Auswahlmatrix durchgeführt. Die Auswahlmatrix kann mithilfe eines Programms berechnet werden. Dabei werden die Abschaltbeziehungen zwischen den Mess- und Signalerzeugungsvorrichtungen sowie den Auslöseeinrichtungen bestimmt. Es können Sicherheitsmargen eingestellt werden, derart, dass im Falle einer Störung sicher und zuverlässig zumindest eine Energieerzeugungsvorrichtung ausgewählt und vom Stromnetz getrennt wird.

Nach einer besonders vorteilhaften Ausgestaltung wird die Auswahlmatrix wiederkehrend durch eine in der Leitstelle in Abhängigkeit des aktuellen Lastzustands neu berechnete aktualisierte weitere Auswahlmatrix ersetzt. Dabei können die Abschaltbeziehungen zwischen den Mess- und Signalerzeugungsvorrichtungen und den Auslöseeinrichtungen in Abhängigkeit der den Lastzustand des Stromnetzes wiedergegebenen und an die Leitstelle übermittelten Parameter wiederkehrend ermittelt werden. Die Abschaltbeziehungen können gemäß einem vorgegebenen Algorithmus optimiert werden, derart, dass im Störungsfall nur eine minimale Anzahl an Energieerzeugungsvorrichtungen vom Stromnetz getrennt wird.

Nach einer weiteren vorteilhaften Ausgestaltung werden durch die Auswahlmatrix die Signalwege vorgegeben, welche im aktiven Betriebszustand der Steuerung freigeschaltet werden.

Vorteilhafterweise umfasst die Auslöseeinrichtung eine Empfangseinheit zum Empfang eines über die Binärsignalübertragungseinrichtung übertragenen Binärsignals. Auf den Empfang des Binärsignals hin wird der Leistungsschalter geöffnet.

Die Durchführung des erfindungsgemäßen Verfahrens kann weitgehend unter Verwendung von herkömmlich verfügbaren Komponenten, insbesondere herkömmlich verfügbaren Leistungsschalter und dgl., erfolgen. Durch die erfindungsgemäße Kombination und Verknüpfung der Komponenten wird eine Auslastung eines Stromnetzes bis zur thermischen Belastungsgrenze ermöglicht.

Nachfolgend wird ein Ausführungsbeispiel der Erfindung anhand der Zeichnungen näher erläutert. Es zeigen:
- Fig. 1: ein Blockschaltbild einer erfindungsgemäßen Vorrichtung und
- Fig. 2: ein Blockschaltbild der zweiten Sicherungseinrichtung gemäß Fig. 1.

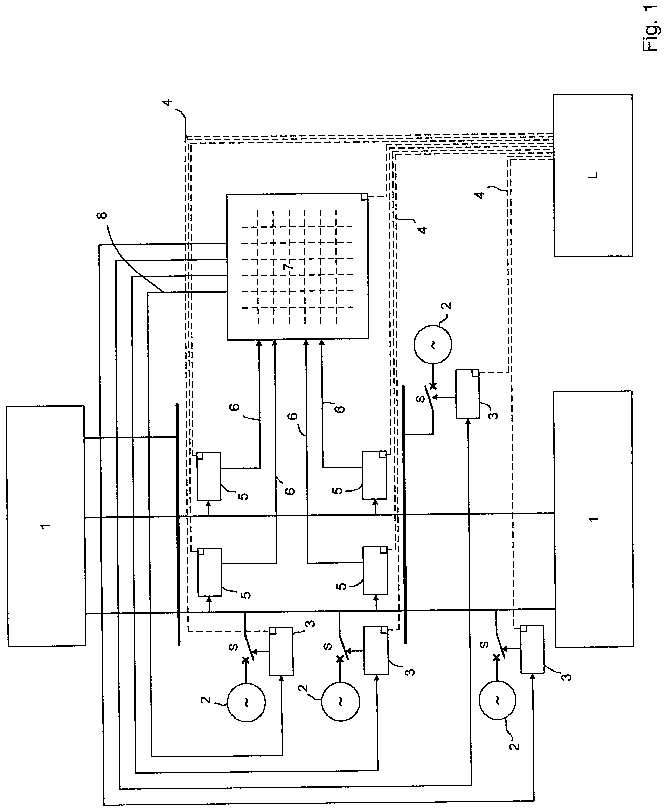

In Fig. 1 ist mit dem Bezugszeichen 1 allgemein ein vermaschtes Stromnetz bezeichnet. Mit dem Bezugszeichen 2 sind Energieerzeugungsvorrichtungen bezeichnet, welche jeweils über einen Leistungsschalter S mit dem Stromnetz 1 verbunden sind. Bei den Energieerzeugungsvorrichtungen handelt es sich beispielsweise um erneuerbare Energieerzeugungsvorrichtungen. Die Leistungsschalter S sind Teil einer ersten Sicherheitseinrichtung. Damit kann beispielsweise im Falle eines Kurzschlusses eine dem jeweiligen Leistungsschalter S zugeordnete Energieerzeugungsvorrichtung 2 vom Stromnetz 1 getrennt werden.

Weiterhin ist insbesondere zum Zwecke der verbesserten Auslastung des Stromnetzes eine zweite Sicherheitseinrichtung vorgesehen.

Jedem der Leistungsschalter S ist zur Ansteuerung eine Auslöseeinrichtung 3, z. B. ein Kommandorelais, Leistungsrelais oder ein Schutzgerät, zugeordnet. Die Auslöseeinrichtungen 3 sind mit einer Leitstelle L über in Fig. 1 durch unterbrochene Linien kenntlich gemachte Kommunikationsverbindungen 4 zum Datenaustausch verbunden.

Mit dem Bezugszeichen 5 sind Mess- und Signalerzeugungsvorrichtungen bezeichnet, mit denen beispielsweise der Strom, die Lastflussrichtung und dgl. im Stromnetz 1 erfasst wird. Die Mess- und Signalerzeugungsvorrichtungen 5 sind über mit durchgezogenen Linien kenntlich gemachte Binärsignalübertragungseinrichtungen 6 mit einer Steuerung 7 verbunden. Die Steuerung 7 kann beispielsweise nach Art eines intelligenten Kreuzschienenverteilers ausgebildet sein. Die Steuerung 7 ist mittels weiterer Binärsignalübertragungseinrichtungen 8 jeweils mit den Auslöseeinrichtungen 3 verbunden. Ferner ist die Steuerung 7 mittels einer Kommunikationsverbindung 4 mit der Leitstelle L verbunden. Die Mess- und Signalerzeugungsvorrichtungen 5 sind ebenfalls über Kommunikationsverbindungen mit der Leitstelle L verbunden.

Die zweite Sicherheitseinrichtung umfasst insbesondere die Auslöseeinrichtungen 3, die Mess- und Signalerzeugungsvorrichtung 5, die Steuerung 7 sowie die Leitstelle L und die zum Datenaustausch vorgesehenen Kommunikationsverbindungen. Die zweite Sicherheitseinrichtung stellt eine Ergänzung zu einem Stromnetz dar, welches in herkömmlicher Weise mit einer ersten Sicherheitseinrichtung abgesichert ist. Die zweite Sicherheitseinrichtung nutzt die durch die erste Sicherheitseinrichtung bereits bereitgestellten Leistungsschalter. Sie nutzt ferner ein in der Leitstelle vorhandenes Netzüberwachungsprogramm. In der Leitstelle ist allerdings ein das Netzüberwachungsprogramm erweiterndes zusätzliches Programm zur Steuerung der zweiten Sicherheitseinrichtung, insbesondere zur Aktivierung der Steuerung 7, vorgesehen.

Die Funktion der Vorrichtung ist Folgende:
Die Leitstelle L empfängt und verarbeitet laufend Daten (hier nicht gezeigt), welche den Lastzustand des Stromnetzes 1 wiedergeben. In der Leitstelle L wird auf der Grundlage dieser Daten mittels eines Netzüberwachungsprogramms ein Lastzustand des Stromnetzes 1 prognostiziert.

In der Leitstelle L ist ein Last-Grenzwert hinterlegt. Wenn der Lastzustand den Last-Grenzwert überschreitet, sendet die Leitstelle L ein Aktivierungssignal an die Steuerung 7. Wenn die Steuerung 7 das Aktivierungssignal empfängt, werden darin gemäß einer Auswahlmatrix A vorgegebene Schaltwege freigeschaltet.

Die Mess- und Signalerzeugungsvorrichtungen 5 überwachen ständig die ihnen zugeordneten Äste des Stromnetzes 1 auf Störungen. Zu diesem Zweck werden insbesondere der jeweils durch sie fließende Strom und die jeweils bei ihnen herrschende Lastflussrichtung gemessen sowie bei ihnen auftretende weitere Abschaltsignale erfasst. Eine Störung wird erkannt, wenn weitere Abschaltsignale und/oder eine starke Änderung von Messwerten erfasst werden. Bei Überschreiten fest vorgegebener und in den Mess- und Signalerzeugungsvorrichtungen 5 hinterlegter Grenzwerte für Strom und Lastflussrichtung wird die Mess- und Signalerzeugungsvorrichtung 5 zweckmäßigerweise zeitlich verzögert in einen aktiven Betriebszustand versetzt. Im aktiven Betriebszustand wird bei Erkennung einer Störung durch die Mess- und Signalerzeugungsvorrichtung 5 ein Abschaltsignal zum Öffnen von zumindest einem Leistungsschalter S erzeugt. Dieses Abschaltsignal wird unverzögert oder auch zeitlich verzögert ausgegeben. - Das Abschaltsignal wird z. B. beim Auftreten einer Störung unverzüglich erzeugt. Das Abschaltsignal kann auch erst dann erzeugt werden, wenn der Störzustand beispielsweise zumindest 5 bis 7 Sekunden andauert. Sofern sich die Steuerung 7 im aktivierten Zustand befindet, wird das Abschaltsignal gemäß der dort vorgegebenen Auswahlmatrix A auf zumindest einem vorgegebenen Schaltweg über zumindest eine weitere Binärsignalübertragungseinrichtung 8 zu zumindest einer der Auslöseeinrichtungen 3 weitergeleitet. Wenn eine Auslöseeinrichtung 3 ein Abschaltsignal empfängt, erzeugt diese ein Signal, mit dem z. B. ein Leistungsrelais angesteuert und der Leistungsschalter S geöffnet wird. Infolgedessen wird eine mit dem Leistungsschalter S abgesicherte Energieerzeugungsvorrichtung 2 vom Stromnetz 1 getrennt.

Die Auswahlmatrix A kann in der Steuerung 7 in einen sogenannten "Offline"-Betrieb fest hinterlegt sein. In diesem Fall wird ein von einer Mess- und Signalerzeugungsvorrichtung 5 erzeugtes Abschaltsignal auf einem durch die Auswahlmatrix A vorgegebenen Schaltweg an eine vorgegebene Auslöseeinrichtung 3 über die entsprechende weitere Binärsignalübertragungseinrichtung 8 weitergeleitet.

Alternativ ist es auch möglich, die Steuerung 7 in einem sogenannten "Online"-Betrieb zu betreiben. In diesem Fall wird die Auswahlmatrix A wiederkehrend in der Leitstelle L auf der Grundlage der dort gesammelten Parameter mittels des Programms neu berechnet. Die Auswahlmatrix A wird sodann wiederkehrend durch die neu berechnete weitere Auswahlmatrix A' (nicht gezeigt) ersetzt. Die Aktualisierung der Auswahlmatrix A auf der Grundlage des jeweiligen Lastzustands des Stromnetzes 1 ermöglicht eine noch effizientere Nutzung des Stromnetzes 1 bis an dessen thermische Belastungsgrenzen.

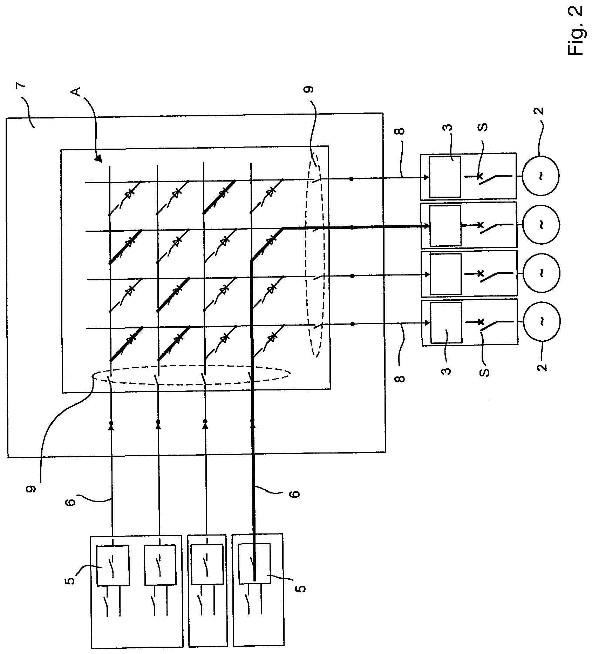

Fig. 2 zeigt ein Blockschaltbild einer zweiten Sicherheitseinrichtung. Die in der Steuerung 7 hinterlegte Auswahlmatrix A ist beispielshaft anhand dicker schwarzer Linien gezeigt. Damit ist für jedes von einer Mess- und Signalübertragungseinrichtung 5 erzeugtes Abschaltsignal ein oder mehrere Übertragungswege fest vorgegeben. Bei dem in Fig. 2 gezeigten Beispiel wird ein Abschaltsignal über die mit der dicken Linie gekennzeichneten Binärsignalübertragungseinrichtungen 6, 8 an ein Auslöseeinrichtung 3 übermittelt.

Mit dem Bezugszeichen 9 sind Schalter bezeichnet. Die Schalter 9 werden im Falle des Empfangs eines von der Leitstelle L gesendeten Aktivierungssignals geschlossen. Im aktiven Zustand sind in der Steuerung 7 die Schaltwege gemäß der Auswahlmatrix A durchgeschaltet. D. h. bei Erzeugung eines Ausschaltsignals mittels einer der Mess- und Signalerzeugungseinrichtungen 5 wird dieses über die Auswahlmatrix A schnell und effizient an eines oder mehrere der Auslöseeinrichtungen 3 weiterverteilt. Infolgedessen werden die entsprechenden Leistungsschalter S geöffnet und die damit abgesicherten Energieerzeugungsvorrichtungen 2 vom Stromnetz 1 getrennt.

### Bezugszeichenliste

- 1: Stromnetz
- 2: Energieerzeugungsvorrichtung
- 3: Auslöseeinrichtung
- 4: Kommunikationsverbindung
- 5: Mess- und Signalerzeugungsvorrichtung
- 6: Binärsignalübertragungseinrichtung
- 7: Steuerung
- 8: weitere Binärsignalübertragungseinrichtung
- 9: Schalter

- A: Auswahlmatrix
- L: Leitstelle
- S: Leistungsschalter

## Patentansprüche

1. Verfahren zum Transport von Strom über ein vermaschtes Stromnetz (1), bei dem mittels mehrerer Energieerzeugungsvorrichtungen (2) diskontinuierlich Strom in das Stromnetz (1) eingespeist wird,
wobei das Stromnetz (1) mittels einer ersten Sicherheitseinrichtung gegen Störungen abgesichert ist, wobei die erste Sicherheitseinrichtung zum Trennen jeder der Energieerzeugungsvorrichtungen (2) vom Stromnetz (1) jeweils einen Leistungsschalter (S) umfasst,
**dadurch gekennzeichnet, dass**
eine zweite Sicherheitseinrichtung vorgesehen ist, welche eine Steuerung (7), mehrere Auslöseeinrichtungen (3) zum Öffnen der Leistungsschalter (S) und mehrere Mess- und Signalerzeugungsvorrichtungen (5) umfasst, mit denen das Stromnetz (1) auf Störungen überwacht wird, wobei die Steuerung (7) mit den Mess- und Signalerzeugungsvorrichtungen (5), den Auslöseeinrichtungen (3) sowie mit einer Leitstelle (L), mit der laufend ein Lastzustand des Stromnetzes (1) überwacht wird, zum Datenaustausch verbunden ist. wobei die Steuerung (7) durch ein von der Leitstelle (L) erzeugtes Aktivierungssignal in einen aktiven Betriebszustand versetzt wird, wenn der Lastzustand den Last-Grenzwert überschreitet, wobei im aktiven Betriebszustand der Steuerung (7) Signalwege zwischen den Mess- und Signalerzeugungsvorrichtungen (5) und den Auslöseeinrichtungen (3) freigeschaltet sind,
wobei bei Erkennung einer Störung im Stromnetz (1) mittels einer Mess- und Signalerzeugungsvorrichtung (5) ein Abschaltsignal erzeugt und an die Steuerung (7) übermittelt wird,
wobei mittels der Steuerung (7) zumindest eine der Auslöseeinrichtungen (3) ausgewählt wird, und
wobei das Abschaltsignal über zumindest einen frei geschalteten Signalweg an die zumindest eine ausgewählte Auslöseeinrichtung (3) weitergeleitet wird, daraufhin mit der Auslöseeinrichtung (3) der Leistungsschalter (S) geöffnet wird, so dass die entsprechende Energieerzeugungsvorrichtung (2) vom Stromnetz (1) getrennt wird.

2. Verfahren nach Anspruch 1, wobei zur Erkennung einer Störung im Stromnetz (1) mit jeder der Mess- und Signalerzeugungsvorrichtungen (5) der durch sie fließende Strom, die bei ihr herrschende Lastflussrichtung und/oder ein bei ihr auftretendes weiteres Abschaltsignals erfasst wird.

3. Verfahren nach einem der vorhergehenden Ansprüche, wobei jede Mess- und Signalerzeugungsvorrichtung (5) bei Überschreiten eines für den durch sie fließenden Strom und/oder eine bei ihr herrschende Lastflussrichtung vorgegebenen Ansprech-Grenzwerts mit einer vorgegebenen zeitlichen Verzögerung von einem passiven in einen aktiven Betriebszustand versetzt wird, wobei das Abschaltsignal nur im aktiven Betriebszustand erzeugt wird.

4. Verfahren nach einem der vorhergehenden Ansprüche, wobei die Steuerung (7), die Mess- und Signalerzeugungsvorrichtungen (5) sowie die Auslöseeinrichtungen (3) mittels Binärsignalübertagungseinrichtungen (6, 8) zur Signalübertragung verbunden sind.

5. Verfahren nach einem der vorhergehenden Ansprüche, wobei die Auswahl der Auslöseeinrichtung (3) mittels einer in der Steuerung (7) gespeicherten vorgegebenen Auswahlmatrix (A) durchgeführt wird.

6. Verfahren nach Anspruch 5, wobei die Auswahlmatrix (A) wiederkehrend durch eine in der Leitstelle (L) in Abhängigkeit des aktuellen Lastzustands wiederkehrend neu berechnete aktualisierte weitere Auswahlmatrix (A') ersetzt wird.

7. Verfahren nach einem der Ansprüche 5 oder 6, wobei die Signalwege durch die Auswahlmatrix oder die weitere Auswahlmatrix vorgegeben werden.

## Claims

1. A method for transporting electric current over a meshed power network (1), in which electric current is discontinuously fed into the power network (1) using a plurality of energy-generating devices (2)
wherein the power network (1) is protected against failures using a first safety means, the first safety means comprising a respective circuit breaker (S) for disconnecting each one of the energy-generating devices (2) from the power network (1),
**characterized in that**
a second safety means is provided which comprises a controller (7), a plurality of tripping devices (3) for opening the circuit breakers (S) and a plurality of measuring and signal-generating devices (5) used to monitor the power network (1) for failures, the controller (7) being connected for data exchange to the measuring and signal-generating devices (5), the tripping devices (3) and a control station (L), where a load state of the power network (1) is continuously monitored, wherein the controller (7) is set to an active operating state by an activation signal generated by the control station (L) when the load state exceeds the load threshold value,
wherein, in the active operating state of the controller (7), signaling paths between the measuring and signal-generating devices (5) and the tripping devices (3) are enabled,
wherein, when failure is detected in the power network (1), a disabling signal is generated by a measuring and signal-generating device (5) and is transmitted to the controller (7),
wherein at least one of the tripping devices (3) is selected using the controller (7), and
wherein the disabling signal is forwarded to the at least one selected tripping device (3) via at least one enabled signaling path, whereupon the circuit breaker (S) is opened using the tripping device (3), so that the corresponding energy-generating device (2) is disconnected from the power network (1).

2. The method according to claim 1, wherein, for detecting failure of the power network (1), with each of the measuring and signal-generating devices (5) the current flowing therethrough, the load flow direction existing therein and/or another disabling signal occurring therein is detected.

3. The method according to one of the preceding claims, wherein each measuring and signal-generating device (5), when exceeding a threshold value for the current flowing therethrough and/or a load flow direction existing therein exceeding a preset response level, is brought from a passive to an active operating state with a timed delay, the disabling signal being generated only in the active operating state.

4. The method according to one of the preceding claims, wherein the controller (7), the measuring and signal-generating devices (5) and the tripping devices (3) are connected to each other by means of binary signal transmission devices (6, 8) for signal transmission.

5. The method according to one of the preceding claims, wherein selecting the tripping means (3) is performed using a predetermined selection matrix (A) stored in the controller (7).

6. The method according to claim 5, wherein the selection matrix (A) is repeatedly replaced by another updated selection matrix (A') recurrently recalculated in the control station (L) depending of the actual load state.

7. The method according to one of claims 5 or 6, wherein the signaling paths are predetermined by the selection matrix or the other selection matrix.

## Revendications

1. Procédé de transport de courant via un réseau électrique maillé (1) utilisant plusieurs dispositifs de production d'énergie (2) pour alimenter de manière discontinue le réseau électrique (1) en courant,
en ce que le réseau électrique (1) est protégé contre des interférences au moyen d'un premier dispositif de sécurité, en ce que le premier dispositif de sécurité servant à déconnecter chacun des dispositifs de production d'énergie (2) du réseau électrique (1) comprend respectivement un disjoncteur (S),
**caractérisé en ce qu'**
un deuxième dispositif de sécurité est prévu, lequel comporte une commande (7), plusieurs dispositifs de déclenchement (3) pour l'ouverture des disjoncteurs (S) et plusieurs dispositifs de mesure et de génération de signaux (5) surveillant les perturbations du réseau électrique (1), **en ce que** la commande (7) est reliée pour l'échange de données aux dispositifs de mesure et de génération de signaux (5), dispositifs de déclenchement (3) ainsi qu'à un poste de commande (L) par l'intermédiaire duquel un état de charge du réseau électrique (1) est surveillé en permanence,
**en ce qu'**un signal d'activation généré par le poste de commande (L) fait passer la commande (7) en un état opérationnel actif lorsque l'état de charge dépasse la valeur limite de charge,
**en ce que** des trajets de signaux entre les dispositifs de mesure et de génération de signaux (5) et les dispositifs de déclenchement (3) sont activés dans un état opérationnel actif de la commande (7),
**en ce qu'**un signal de coupure est généré en cas de détection d'un défaut dans le réseau électrique (1) au moyen d'un dispositif de mesure et de génération de signaux (5) et est transmis à la commande (7),
**en ce qu'**au moins un des dispositifs de déclenchement (3) est sélectionné au moyen de la commande (7), et
**en ce que** le signal de coupure est transmis via au moins un trajet de signal activé à au moins un dispositif de déclenchement (3) sélectionné, puis le disjoncteur (S) s'ouvre avec le dispositif de déclenchement (3), de telle sorte que le dispositif de production d'énergie correspondant (2) est séparé du réseau électrique (1).

2. Procédé selon la revendication 1, en ce que pour la détection d'un défaut dans le réseau électrique (1) chacun des dispositifs de mesure et de génération de signaux (5) mesure le courant circulant dans celui-ci, la direction du flux de charge dominante dans celui-ci et/ou un autre signal de coupure survenant dans celui-ci.

3. Procédé selon l'une des revendications précédentes, en ce que chaque dispositif de mesure et de génération de signaux (5) lors d'un dépassement d'une valeur limite de réponse prédéterminée avec une temporisation prédéterminée pour le courant circulant dans celui-ci et/ou une direction du flux de charge dominante dans celui-ci passe d'un état opérationnel passif à un état opérationnel actif, le signal de coupure étant généré uniquement en état opérationnel actif.

4. Procédé selon l'une des revendications précédentes, en ce que la commande (7), les dispositifs de mesure et de génération de signaux (5) ainsi que les dispositifs de déclenchement (3) sont reliés au moyen de dispositifs de transmission de signaux binaires (6, 8) pour la transmission de signaux.

5. Procédé selon l'une des revendications précédentes, en ce que la sélection du dispositif de déclenchement (3) est effectuée au moyen d'une matrice de sélection (A) prédéterminée mémorisée dans la commande (7).

6. Procédé selon la revendication 5, en ce que la matrice de sélection (A) est remplacée de manière récurrente par une autre matrice de sélection (A') mise à jour qui est recalculée de manière récurrente dans le poste de commande (L) en fonction de l'état de charge actuel.

7. Procédé selon l'une des revendications 5 ou 6, en ce que les trajets de signaux sont prédéterminés par la matrice de sélection ou l'autre matrice de sélection.
